# EUROPÄISCHE PATENTANMELDUNG

(11) **EP 1 591 397 A1**
(43) Veröffentlichungstag der Anmeldung: **02.11.2005**
(21) Anmeldenummer: 05005881.7
(22) Anmeldetag: 17.03.2005
(51) Int. Cl.: B65H 45/14, B65H 45/12

(54) **Kombifalzmaschine mit zweiteiliger Schutzhaube**

(30) Priorität: 26.04.2004 DE 202004006565 U
(71) Anmelder: MASCHINENBAU OPPENWEILER BINDER GmbH & Co. KG, 71570 Oppenweiler (DE)
(72) Erfinder: Dannemann, Georg, 71522 Backnang (DE); Beck, Christoph, 71579 Spiegelberg (DE)
(74) Vertreter: Hano, Christian

(57) **Zusammenfassung**

Die Kombifalzmaschine umfasst eine Bogeneinlaufeinrichtung (16), einen Falztaschen (17, 19) und einen Walzenstuhl (20) aufweisenden Parallelbruch (12) und einem Kreuzbruch (14), die in Bogenlaufrichtung nacheinander an einem Gestell angebracht sind, und eine Schutzhaubeneinrichtung(33), die in geschlossenen Zustand die Bogeneinlaufeinrichtung (16), den Parallelbruch (12) und den Kreuzbruch (14) oben und seitlich durchgehend abdeckt und am Gestell schwenkbar gelagert ist. Die Schutzhaubeneinrichtung (33) umfasst einen ersten Haubenteil (34) und einen zweiten Haubenteil (32), die in Bogenlaufrichtung nacheinander angeordnet und verschwenkbar gelagert sind, wobei der erste Haubenteil (34) die Bogeneinlaufeinrichtung (16) und den Walzenstuhl (20) des Parallelbruches (12) und der zweite Haubenteil (32) den Kreuzbruch (14) abdeckt. Eine Sicherheitseinrichtung schaltet bei Öffnung des zweiten Haubenteils (32) den Antrieb der Kombifalzmaschine ab.

## Beschreibung

Die Erfindung betrifft eine Kombifalzmaschine mit den Merkmalen des Oberbegriffes des Patentanspruchs 1.

Aus dem deutschen Gebrauchsmuster G 3004184.4 ist eine Kombifalzmaschine mit einem Parallelbruch und einem Kreuzbruch bekannt. Die Schutzhaube deckt in geschlossenem Zustand den Bogeneinlauf des Parallelbruchs, den Parallelbruch und den Kreuzbruch oben und seitlich durchgehend ab, um neben der Schutzfunktion auch eine gute schalldämmende Wirkung zu erzielen. Wenn Arbeiten an dem Parallelbruch oder dem Kreuzbruch erforderlich sind, wird die gesamte Schutzhaube der bekannten Kombifalzmaschine in eine Öffnungsstellung verschwenkt. Aus arbeitsschutztechnischen Gründen ist es zwingend erforderlich, dass der Antrieb der Kombifalzmaschine bei Öffnung der Schutzhaube abgeschaltet wird, um Verletzungen einer Bedienungsperson durch den Falzschwertantrieb in dem Kreuzbruch zu vermeiden. Zur Durchführung von Einstellarbeiten und für visuelle Beobachtungen des Bogeneinlaufs im Bereich des Parallelbruchs ist ein Öffnen der Schutzhaube erforderlich, so dass dies auch einen Maschinenstillstand zur Folge hat, obwohl dieser Bereich arbeitsschutztechnisch unbedenklich ist. Darüber hinaus ist die einteilige Schutzhaube sehr groß und hierdurch unhandlich.

Der Erfindung liegt die Aufgabe zu Grunde, mit konstruktiv einfachen Mitteln eine Kombifalzmaschine mit einer Schutzhaubenvorrichtung zu schaffen, die bei Gewährleistung der erforderlichen Arbeitsschutzsicherheit Arbeiten im Bereich des Bogeneinlaufs ohne Maschinenstillstand ermöglicht.

Diese Aufgabe wird erfindungsgemäß durch eine Kombifalzmaschine mit den Merkmalen des Patentanspruchs 1 gelöst. Eine vorteilhafte Weiterbildung der erfindungsgemäßen Kombifalzmaschine ist Gegenstand des Patentanspruchs 2.

Bei der erfindungsgemäßen Kombifalzmaschine wird der Antrieb der Kombifalzmaschine nur bei Öffnung des zweiten Haubenteils abgeschaltet, der den arbeitschutztechnisch relevanten Kreuzbruch abdeckt. Eine entsprechende Sicherheitseinrichtung ist bei dem ersten Haubenteil nicht vorgesehen, so dass der erste Haubenteil geöffnet werden kann, ohne dass der Antrieb der Kombifalzmaschine abgeschaltet wird. Der erste Haubenteil wirkt somit als reine Schallschutzeinrichtung über dem Parallelbruch. Der zweite Haubenteil dient als Schalldämm- und Schutzeinrichtung über dem Kreuzbruch.

Die beiden unabhängigen Haubenteile sind deutlich kleiner als eine einteilige Haube und somit handlicher.

Ein Ausführungsbeispiel der Erfindung wird nachstehen anhand von Zeichnungen näher erläutert, es zeigen
Fig. 1 - eine Seitenansicht einer Kombifalzmaschine mit einer geschlossenen Schutzhaubeneinrichtung,
Fig.2 - die Kombifalzmaschine von Fig. 1 mit geöffneter Schutzhaubeneinrichtung.

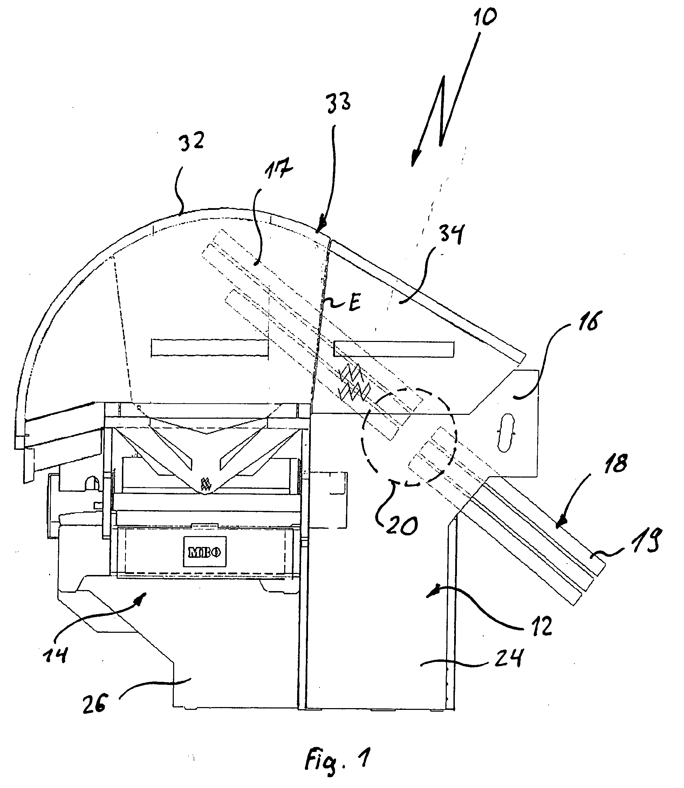

Die in Fig. 1 gezeigte Kombifalzmaschine 10 weist in Bogeneinlaufrichtung nacheinander einen Parallelbruch 12 mit einem Taschenfalzwerk 18 und einen Kreuzbruch 14 mit einem Falzschwertantrieb auf. Der Parallelbruch 12 sowie der Kreuzbruch 14 werden seitlich durch im Abstand zueinander angeordnete Seitenwände begrenzt, von denen in Fig. 1 die Seitenwände 24 bzw. 26 einer Seite gezeigt sind. Der Parallelbruch 12 weist eine Bogeneinlaufeinrichtung 16 auf, die einen Bogen in einen Walzenstuhl 20 einführt, der zwischen gegenüberliegenden Falztaschensätzen 17, 19 des Taschenfalzwerkes 18 angeordnet ist. Der Walzenstuhl 20 ist durch einen strichlinierten Kreis angedeutet.

Der Parallelbruch 12 und der Kreuzbruch 14 sind von oben und seitlich durch eine Schutzhaubeneinrichtung 33 so abgedeckt, dass eine schalldämmende Wirkung erzielt wird.

Die Schutzhaubeneinrichtung 33 umfasst einen den Bogeneinlauf 16 und den Walzenstuhl 20 abdeckenden ersten Haubenteil 34 und einen an diesen angrenzenden zweiten Haubenteil 32, der den Kreuzbruch 14 abdeckt. Die beiden Haubenteile 32, 34 liegen entlang einer Ebene E aneinander, die senkrecht zur Bogeneinlaufrichtung und im Wesentlichen vertikal verläuft, wobei "im Wesentlichen" bedeuten soll, dass die Ebene auch in einem Winkel von 20° zu beiden Seiten der Vertikalen verlaufen kann.

Zur Schalldämmung erstrecken sich die Haubenteile 32, 34 seitlich über den oberen Rand der Seitenwände 24, 26. Die obere Oberfläche des ersten Haubenteils 34 erstreckt sich von dem Bogeneinlauf 16 aus in gerader Linie schräg nach oben und geht bündig in die obere bogenförmig ausgebildete Oberfläche des zweiten Haubenteils 32 über, die zunächst nach oben und anschließend an den Bereich der höchsten Stelle des oberen Falztaschensatzes 17 nach unten verläuft.

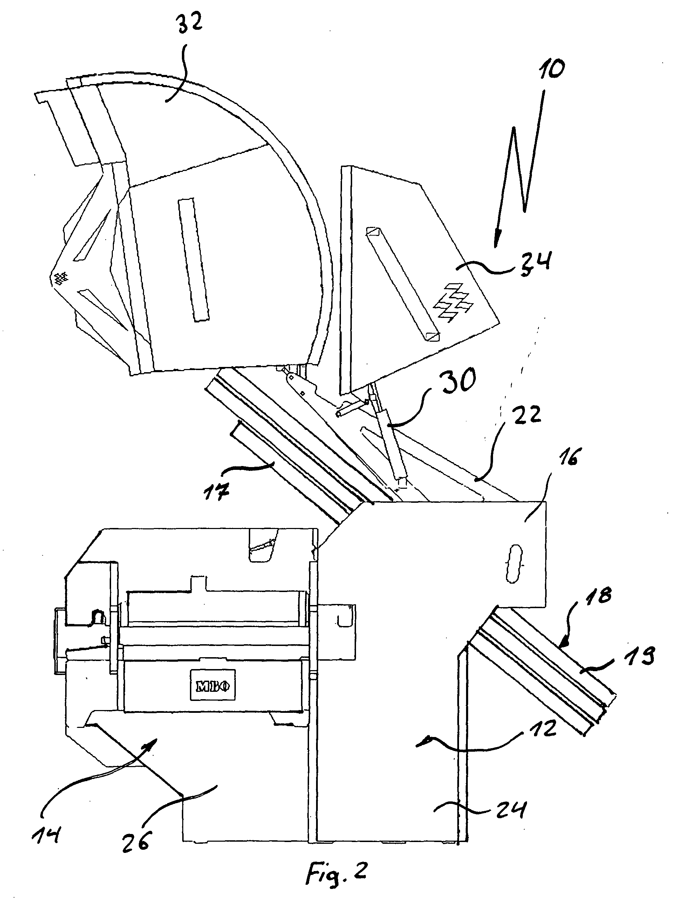

Wie es in Fig. 2 gezeigt ist, ist an dem Gestell der Kombifalzmaschine 10 eine sich in Bogenlaufrichtung schräg nach oben erstreckende Strebe 22 angebracht, an der beide Haubenteile 32, 34 verschwenkbar gelagert sind, wobei der erste Haubenteil 34 gegen die Uhrzeigerichtung und der zweite Haubenteil 32 in Uhrzeigerichtung in die Öffnungsstellung verschwenkt werden. Es ist außerdem jeweils eine Teleskopfeder 30 vorgesehen, die den jeweiligen Haubenteil 32, 34 in der geöffneten Stellung hält.

In dem Bereich des Kreuzbruchs ist außerdem ein Sicherheitsschalter (nicht gezeigt) angebracht, der bei Öffnung des zweiten Haubenteils 32 betätigt wird, wobei bei Betätigung des Sicherheitsschalters der Antrieb der Kombifalzmaschine 10 abgeschaltet wird.

## Patentansprüche

1. Kombifalzmaschine mit einer Bogeneinlaufeinrichtung (16), einem Falztaschen (17, 19) und einen Walzenstuhl (20) aufweisenden Parallelbruch (12) und einem Kreuzbruch (14), die in Bogenlaufrichtung nacheinander an einem Gestell angebracht sind, und einer Schutzhaubeneinrichtung (33), die in geschlossenen Zustand die Bogeneinlaufeinrichtung (16), den Parallelbruch (12) und den Kreuzbruch (14) oben und seitlich durchgehend abdeckt und am Gestell schwenkbar gelagert ist, **dadurch gekennzeichnet, dass** die Schutzhaubeneinrichtung (33) einen ersten Haubenteil (34) und einen zweiten Haubenteil (32) umfasst, die in Bogenlaufrichtung nacheinander angeordnet und verschwenkbar gelagert sind, wobei der erste Haubenteil (34) die Bogeneinlaufeinrichtung (16) und den Walzenstuhl (20) des Parallelbruches (12) und der zweite Haubenteil (32) den Kreuzbruch (14) abdeckt, und eine Sicherheitseinrichtung vorgesehen ist, die bei Öffnung des zweiten Haubenteils (32) den Antrieb der Kombifalzmaschine abschaltet.

2. Kombifalzmaschine nach Anspruch 1 oder 2, **dadurch gekennzeichnet, dass** die Sicherheitseinrichtung einen bei Öffnung des zweiten Haubenteils (32) betätigten Schalter umfasst.
